# EUROPEAN PATENT APPLICATION

(11) **EP 2 508 785 A1**
(43) Date of publication of application: **10.10.2012**
(21) Application number: 10834598.4
(22) Date of filing: 02.12.2010
(51) Int. Cl.: F16L 59/06, B32B 15/08, B32B 15/088, B32B 27/28, B32B 27/34

(54) **FILM FOR VACUUM HEAT INSULATING MATERIAL, AND VACUUM HEAT INSULATING MATERIAL**

(30) Priority: 04.12.2009 JP 2009276012
(71) Applicant: Okura Industrial Co., Ltd., Marugame-shi Kagawa 763-8508 (JP)
(72) Inventor: FUKUZAWA, Ryouichi, Marugame-shi Kagawa 763-8508 (JP); MURAI, Toshiyuki, Marugame-shi Kagawa 763-8508 (JP)
(74) Representative: Mai, Dörr, Besier
(86) International application number: PCT/JP2010/071552
(87) International publication number: WO 2011/068148

(57) **Abstract**

Provided are a film for a vacuum heat insulating material which has better gas barrier property as compared with conventional films for a vacuum heat insulating material and which is capable of retaining the excellent gas barrier property even after having been subjected to a folding or deforming process, and a vacuum heat insulating material having a core material hermetically packaged with the film. The film includes a protective layer that is a coextruded and stretched film in which a nylon-based resin, an ethylene-vinyl alcohol copolymer and a nylon-based resin are laminated in this order, a gas barrier layer, and a heat seal layer.

## Description

### TECHNICAL FIELD

The present invention relates to a film for a vacuum heat insulating material and to a vacuum heat insulating material.

### BACKGROUND ART

In recent years, there is a demand for materials having excellent heat insulating properties in view of protection of global environment, in particular energy savings. In this regard, vacuum heat insulating materials are widely used, for example, as heat insulating materials for refrigerators or as insulating panels for heat insulating walls of houses, because of their especially excellent heat insulating properties. Such a vacuum heat insulating material is composed of a core material and a film that packages the core material.

A film for vacuum heat insulating materials is required to have excellent gas barrier property in order to prevent intrusion of outside gas (air) and to maintain a vacuum state for a long period of time. For this reason, as the film for vacuum heat insulating materials, use is made of a laminate film composed of a protective layer, a gas barrier layer which is a metal foil or a polyethylene terephthalate film having, formed thereon, a metal or metal oxide thin layer, and a heat seal layer which comprises a low density polyethylene or a high density polyethylene, wherein the protective layer is a single-layer film of a stretched polyester film, a stretched nylon film or a stretched polypropylene film, a composite film in which the above films are laminated using an adhesive (Patent Document 1), or a composite film in which a biaxially stretched nylon film is laminated on a biaxially stretched ethylene-vinyl alcohol copolymer film using an adhesive (Patent Document 2).

Further, in recent years, an attempt is made to improve the heat insulating performance of vacuum heat insulating materials as a whole by folding fin portions heat-sealed portions) formed in peripheries thereof, in view of the fact that the heat insulating performance of the fin portions is lower than that of the portions in which the core materials are present. Additionally, due to a recent trend in which vacuum heat insulating materials are used in a space having a complicated shape (such as arcuate or rectangular shape), the vacuum heat insulating materials are often deformed to match with the shape of the space in which the materials are to be accommodated. In the foregoing circumstance, films for vacuum heat insulating materials are also required not to cause deterioration of their gas barrier property even when subjected to a folding or deforming process.

A film for a vacuum heat insulating material having a protective layer that is a known laminate film, however, has a problem because the gas barrier property is deteriorated when subjected to a folding or deforming process.

### PRIOR ART DOCUMENTS

### Patent Document:

Patent Document 1: Japanese published unexamined patent application No. S-62-28242
Patent Document 2: Japanese published unexamined patent application No. 2006-17209

### SUMMARY OF THE INVENTION

### Problems to be Solved by the Invention:

It is an object of the present invention to provide a film for a vacuum heat insulating material which has better gas barrier property as compared with a film for a vacuum heat insulating material that uses a conventional protective layer and which is capable of retaining the excellent gas barrier property even after having been subjected to a folding or deforming process, and to provide a vacuum heat insulating material having a core material hermetically packaged with the film. Means for Solving the Problems:

The present inventors have made an earnest study with a view toward solving the above-described problems. As a result it has been found that the above objects can be accomplished by using, as a protective layer, a coextruded and stretched film in which a nylon-based resin, an ethylene-vinyl alcohol copolymer and a nylon-based resin are laminated in this order. The present invention has been completed by this finding.

Thus, the gist of the present invention resides in:
(1) A film for a vacuum heat insulating material, comprising a protective layer that includes a coextruded and stretched film in which a nylon-based resin, an ethylene-vinyl alcohol copolymer and a nylon-based resin are laminated in this order, a gas barrier layer, and a heat seal layer;
(2) The film for a vacuum heat insulating material according to above (1), wherein the gas barrier layer has an aluminum foil; and
(3) A vacuum heat insulating material comprising a core material hermetically packaged with the film for a vacuum heat insulating material according to above (1) or (2).

### Effect of the Invention

The film for a vacuum heat insulating material according to the present invention has better gas barrier property as compared with a film for a vacuum heat insulating material that uses a conventional protective layer and, moreover, is capable of retaining the excellent gas barrier property even after having been subjected to a bending or deforming process. Therefore, the vacuum heat insulating material that uses the film for a vacuum heat insulating material has an effect that it can retain its vacuum state with a high credibility even after having been used for a long period of time without deterioration of its heat insulating performance.

### BRIEF DESCRIPTION OF THE DRAWING

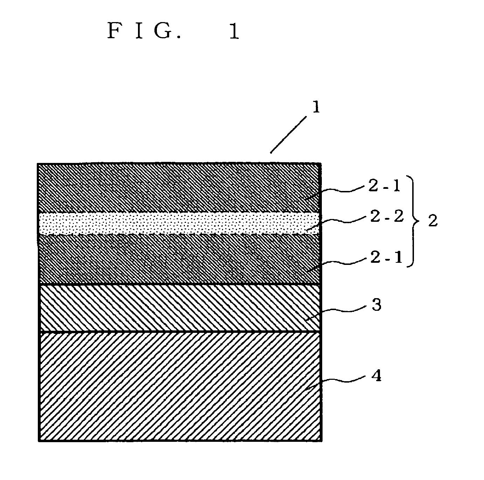

FIG. 1 is a cross-sectional view illustrating a film for a vacuum heat insulating material according to the present invention.

### EMBODIMENTS OF THE INVENTION

The present invention is described in detail below.

In the present invention, a coextruded and stretched film in which a nylon-based resin, an ethylene-vinyl alcohol copolymer and a nylon-based resin are laminated in this order (this film is referred to simply as coextruded and stretched film) is used as a protective layer film for a vacuum heat insulating material. The coextruded and stretched film is characterized by its flexibility and gas barrier property that are imparted as a result of laminating a nylon-based resin having flexibility on both sides of an ethylene-vinyl alcohol copolymer layer having gas barrier property by coextrusion without using an adhesive.

As the nylon-based resin, there may be mentioned 6-nylon, 6,6-nylon, 6,10-nylon, 6,12-nylon, 11-nylon, 12-nylon and a mixture of two or more of these resins. In the nylon-based resin, an additive or additives such as various kinds of stabilizers, dyes, pigments, lubricating agents and anti-blocking agents may be added within the range not departing from the gist of the present invention.

As the ethylene-vinyl alcohol copolymer (herein after referred to as EVOH), those which have an ethylene content of 20 to 65 mole%, particularly 29 to 44 mole%, are preferred among various EVOHs. The saponification degree of EVOH is suitably 95 mole% or more, preferably 98 mole% or more. An ethylene content of less than 20 mole% is not preferable because the melt extrusion property of EVOH during a melt extrusion step is degraded and EVOH tends to be colored. An ethylene content exceeding 65 mole% is not preferable because the gas barrier property tends to be deteriorated. It is also not preferred that the saponification degree of EVOH becomes lower than 95 mole%, because the gas barrier property and resistance to moisture thereof are degraded.

The coextruded and stretched film which is used as the protective layer may be obtained by forming a film, in which a nylon-based resin, EVOH and a nylon-based resin are laminated in this order, by any conventional method, such as coextrusion. The laminated film is then stretched and subjected to a heat treatment for imparting dimensional stability thereto, thereby obtaining the coextruded and stretched film. As the stretching method, conventionally known stretching methods, such as tenter type sequential biaxial stretching, tenter type simultaneous biaxial stretching and tubular type simultaneous biaxial stretching, may be used within the range not departing from the gist of the present invention.

It is preferred that the coextruded and stretched film have a total thickness of 10 to 30 µm, more preferably 15 to 25 µm. When the total thickness is less than 10 µm, the film tends to be broken during stretching and is problematic in its production stability. When the total thickness exceeds 30 µm, the film is deficient in flexibility and is not practical with respect to handling property. The thickness of the EVOH layer of the coextruded and stretched film is preferably 2 to 10 µm, more preferably 3 to 10 µm. When the thickness of the EVOH layer is less than 2 µm, there is a possibility that the gas barrier property is deteriorated. On the other hand, a thickness in excess of 10 µm is not preferable not only because the flexibility of the coextruded and stretched film is deteriorated but also because the material cost of the coextruded and stretched film becomes high. Each of the layers of the nylon-based resin that are present on both sides of the coextruded and stretched film preferably has a thickness in the range of 3 to 10 µm.

The protective layer used in the film for a vacuum heat insulating material according to the present invention may consist only of the above coextruded and stretched film. Alternatively, the protective layer may be provided with other desired layer or layers as needed within the range not departing from the gist of the present invention.

The gas barrier layer used in the film for a vacuum heat insulating material according to the present invention may be a metal foil, a plastic film having a thin layer of a metal or a metal oxide formed thereon, or a combination of a plurality of these.

As the metal foil, there may be particularly suitably used a conventionally known aluminum foil from the various viewpoints such as gas barrier property and economy. The aluminum foil preferably has a thickness of 5 to 50 µm, more preferably 5 to 30 µm. Generally, pinholes increase as the aluminum foil becomes excessively thin. On the other hand, heat leak increases as the aluminum foil becomes excessively thick. Either case is not preferable because the heat insulating property is reduced. The plastic film having a thin layer of a metal or a metal oxide formed thereon is, for example, a film obtained by forming a single layered or a multi-layered thin film composed of a metal (such as aluminum), a metal oxide (such as silica or alumina) or a mixture thereof, on a polyethylene terephthalate film or an EVOH film. The gas barrier layer used in the present invention is preferably a metal foil, particularly an aluminum film, rather than a plastic film having a thin layer of a metal or a metal oxide formed thereon.

The heat seal layer of the film for a vacuum heat insulating material according to the present invention is a portion that has the greatest gas permeability in the film. Thus, the properties of the heat seal layer have a great influence upon the heat insulating performance of the vacuum heat insulating material with the lapse of time. The heat seal layer preferably has a thickness of 10 to 100 µm for reasons of stability of sealing quality at the time of vacuum sealing step and prevention of gas intrusion from an edge of heat sealed portions. When the thickness of the heat seal layer is less than 10 µm, it is not easy to obtain sufficient bonding force by heat sealing. A thickness in excess of 100 µm, on the other hand, causes not only cost up but also reduction of vacuum by intrusion of gas from an edge of heat sealed portions. Thus, either case is not preferable. Any conventionally known material may be used as a material for the heat seal layer. For example, there may be used one or more resins selected among low density polyethylene, middle density polyethylene, high density polyethylene, linear low density polyethylene, cyclic polyolefin, polypropylene, ethylene-vinyl acetate copolymer, ionomer resin, ethylene-ethyl acrylate copolymer, ethylene-acrylic acid copolymer, ethylene-methacrylic acid copolymer, ethylene-propylene copolymer, acid-modified polyolefin resin (obtained by modifying a polyolefin resin such as a polyethylene or a polypropylene with an unsaturated carboxylic acid such as acrylic acid, methacrylic acid, maleic acid, maleic anhydride, fumaric acid or itaconic acid). In the present invention, the heat seal layer may be formed into a multi-layered structure using the above resins. For example, the heat seal layer may be constituted such that an acid-modified polyolefin resin having good adhesiveness to a metal foil and to other resins is used as a layer that is to be in contact with the gas barrier layer, while a polyolefin resin is used as the innermost layer.

As a method for laminating layers including the protective layer, gas barrier layer and heat seal layer that constitute the film for a vacuum heat insulating material according to the present invention, any conventionally known method may be used. For example, there may be used dry lamination using a two-component curable urethane adhesive or the like adhesive, extrusion coating, heat lamination. If desired, any of these layers may be provided with an anchor coat layer, a print or color layer, a primer layer, an overcoat layer or the like layer.

The film for a vacuum heat insulating material according to the present invention is characterized by the use of, as a protective layer thereof (conventional protective layer is a single layer film or a laminate in which plural films are laminated together using an adhesive), a coextruded and stretched film which has flexibility and gas barrier property and in which a nylon-based resin, an ethylene-vinyl alcohol copolymer and a nylon-based resin are laminated in this order without using an adhesive. By this expedience, the inventive film has excellent gas barrier property and, moreover, is capable of retaining the excellent gas barrier property even after having been subjected to a bending or deforming process.

As a method for producing a vacuum heat insulating material by using the film therefor according to the present invention, there may be used any conventionally known method. For example, the film for a vacuum heat insulating material is formed into a bag by heat sealing opposing heat seal layers. A core material is then placed in the bag. Thereafter, air in the bag is evacuated to establish a vacuum state and an opening thereof is heat sealed, thereby obtaining the vacuum heat insulating material. In this case, the bag for packaging the core material may be prepared by putting two films together and then welding their heat seal layers to each other along arbitrary three sides thereof, or by folding one film into two and then welding opposing heat seal layers to each other along arbitrary two sides thereof.

As the core material, any conventionally known core material may be used. Preferably, the core material is at least one member selected from glass wool, glass fibers, alumina fibers, silica alumina fibers, silica fibers, silicon carbide fibers, rock wool, powdery polyurethane, silica, polystyrene, calcium silicate and polyurethane foams.

For the purpose of further improving initial heat insulating performance and heat insulating performance with the lapse of time of the vacuum heat insulating material, a getter substance such as a gas adsorbent and a moisture adsorbent may be used.

### EAMPLES

The present invention is next described in detail by way of examples. It should be noted that the film for a vacuum heat insulating material according to the present invention is not limited to the examples. Evaluation of films for vacuum heat insulating materials was carried out as follows.
A test piece (200 mm x 300 mm size) was rolled into a tubular form and opposing edges were bonded together. The thus obtained tubular test piece was fixed so that one side thereof was attached to a stationary head with the other side attached to a movable head. The movable head was then driven such that the distance between the stationary head and the movable head was narrowed from 7 inches to 3.5 inches while twisting the test piece through 440 degrees, and then further narrowed to 1 inch as such. Thereafter the distance between the two heads was widened to 3.5 inches, and further widened, while releasing the twist of the test tube, to 7 inches. Such a reciprocating movement was carried out at a speed of 40 times/min and repeated 50 times. The test piece was measured for its oxygen permeability (gas barrier property) according to JIS K7126 (isobaric method) before and after the foregoing bending fatigue test.

### Example 1

A coextruded and stretched film (for use as a protective layer) having a thickness of 15 µm and composed of nylon-based resin (6 µm), EVOH (3 µm) and nylon-based resin (6 µm), an aluminum foil (for use as a gas barrier layer) having a thickness of 6.5 µm and a linear low density polyethylene film (for use as a heat seal layer) having a thickness of 50 µm were laminated in this order and bonded together using an urethane-based adhesive to obtain a film for a vacuum heat insulating material.

### Comparative Example 1

A film for a vacuum heat insulating material was obtained in the same manner as that in Example 1 except for using, as a protective layer, a stretched nylon film having a thickness of 15 µm in lieu of the coextruded and stretched film of Example 1. Comparative Example 2

A film for a vacuum heat insulating material was obtained in the same manner as that in Example 1 except for using, as a protective layer, a stretched polyethylene terephthalate film having a thickness of 12 µm in lieu of the coextruded and stretched film of Example 1.

### Comparative Example 3

A film for a vacuum heat insulating material was obtained in the same manner as that in Example 1 except for using, as a protective layer, a composite film, in which a stretched nylon film (to be located on the aluminum foil side) having a thickness of 15 µm and a stretched polyethylene terephthalate film having a thickness of 12 µm were laminated using an urethane-based adhesive, in lieu of the coextruded and stretched film of Example 1.

### Comparative Example 4

A film for a vacuum heat insulating material was obtained in the same manner as that in Comparative Example 3 except for using, as a gas barrier layer, a laminate, in which an aluminum vapor-deposited stretched polyethylene terephthalate film having a thickness of 12 µm and an aluminum foil were laminated (the vapor-deposited layer was located on the aluminum foil side and the aluminum foil was located on the heat seal layer side), in lieu of the aluminum foil of Comparative Example 3. Comparative Example 5

A laminate film (for use as a protective layer) composed of a stretched polyethylene terephthalate film having a thickness of 12 µm and a biaxially stretched EVOH film having a thickness of 10 µm, an aluminum foil (for use as a gas barrier layer) having a thickness of 7 µm and a linear low density polyethylene film (for use as a heat seal layer) having a thickness of 50 µm were laminated in this order using an urethane-based adhesive to obtain a film for a vacuum heat insulating material having a structure similar to that disclosed Patent Document 2.

The films for vacuum heat insulating materials obtained in Example 1 and Comparative Examples 1 to 5 were each evaluated to give the results shown in Table 1 in which "before bending fatigue test" indicates oxygen permeability measured before the bending fatigue test, while "after bending fatigue test" indicates oxygen permeability measured after the bending fatigue test.

**Table 1**

| | Oxygen Permeability (cc/m²·day·atm) | |
|---|---|---|
| | Before bending fatigue test | After bending fatigue test |
| Example 1 | ≤0.01 | 0.04 |
| Comparative Example 1 | 0.08 | 0.25 |
| Comparative Example 2 | 0.09 | 0.45 |
| Comparative Example 3 | 0.10 | 0.28 |
| Comparative Example 4 | 0.11 | 0.37 |
| Comparative Example 5 | 0.10 | 0.10 |

As shown in Table 1, the film for a vacuum insulating material of Example 1 according to the present invention gives more desirable oxygen permeability before the bending fatigue test as compared with those of Comparative Examples 1 to 5. Further, after the bending fatigue test, the film for a vacuum insulating material of Example 1 gives more desirable oxygen permeability and, therefore, better bending resistance as compared with those of Comparative Examples 1 to 5.
Especially, the comparison of the film for a vacuum heat insulating material of Example 1 with that of Comparative Example 5 indicates that, although both films have a similar EVOH layer, the oxygen permeability of the film of Example 1 after the bending fatigue test is less than half that of the film of Comparative Example 5 and, therefore, the film of Example 1 is excellent in gas barrier property. This effect is achieved not merely because of the presence of an EVOH layer in the protective layer but also because of the use of the coextruded and stretched film in which a nylon-based resin, an ethylene-vinyl alcohol copolymer and a nylon-based resin are laminated in this order by coextrusion without using any adhesive.

### INDUSTRIAL APPLICABILITY

Vacuum heat insulating materials that use the film for a vacuum heat insulating material according to the present invention may be effectively utilized as heat insulators for appliances such as refrigerators, electric pots, electric rice cookers and automatic vending machines; for housing equipments such as water heating appliances, bathtubs, prefabricated bathes and toilet seats; for housing systems such as floor heating appliances, natural refrigerant heat pump water heaters and low temperature radiant heat panels; for house construction materials such as heat insulation panels for exterior walls; and for household goods such as cooler boxes and bottle cases.

### EXPLANATION OF REFERENCE NUMERALS

1: Film for vacuum heat insulating material
2: Protective layer (coextruded and stretched film)
2-1: Nylon-based resin
2-2: Ethylene-vinyl alcohol copolymer
3: Gas barrier layer
4: Heat seal layer

## Claims

1. A film for a vacuum heat insulating material, comprising:
a protective layer that includes a coextruded and stretched film in which a nylon-based resin, an ethylene-vinyl alcohol copolymer and a nylon-based resin are laminated in this order;
a gas barrier layer; and
a heat seal layer.

2. The film for a vacuum heat insulating material according to claim 1, wherein the gas barrier layer has an aluminum foil.

3. A vacuum heat insulating material comprising a core material hermetically packaged with the film for a vacuum heat insulating material according to claim 1 or 2.
